(19) Europäisches Patentamt / European Patent Office / Office européen des brevets

(11) EP 2 502 940 A1

(12) **EUROPEAN PATENT APPLICATION**
published in accordance with Art. 153(4) EPC

(43) Date of publication:
26.09.2012 Bulletin 2012/39

(21) Application number: 10831567.2

(22) Date of filing: 17.11.2010

(51) Int Cl.:
*C08F 2/24* [(2006.01)]     *C08F 2/44* [(2006.01)]

(86) International application number:
PCT/JP2010/070429

(87) International publication number:
WO 2011/062173 (26.05.2011 Gazette 2011/21)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 18.11.2009 JP 2009263240

(71) Applicant: Soken Chemical & Engineering Co.,
Ltd.
Toshima-ku
Tokyo 171-8531 (JP)

(72) Inventor: SEKIYA, Toshio
Sayama-shi
Saitama 350-1320 (JP)

(74) Representative: Matthews, Derek Peter
Dehns
St Bride's House
10 Salisbury Square
London
EC4Y 8JD (GB)

(54) **RESIN PARTICLES AND PROCESS FOR PRODUCTION THEREOF**

(57) [Problem] It is an object of the present invention to obtain resin particles having a small amount of an inorganic dispersing agent (such as silica) adhering to their surfaces and having uniform particle diameters. [Solution to problem] The resin particles of the present invention are resin particles having an inorganic dispersing agent adhering to their surfaces and having a volume mean particle diameter of 1 to 1000 $\mu$m, and are characterized in that the amount of the inorganic dispersing agent adhering to the resin particle surfaces is in the range of 0.0001 to 0.02 $g/m^2$, said amount being determined by the following equation (I): Amount of inorganic dispersing agent adhering to resin particle surfaces = (amount of inorganic dispersing agent (part(s) by weight)/amount of polymerizable monomer (part(s) by weight))/resin particle specific surface area as measured by Mastersizer 2000 manufactured by Malvern Instruments Ltd. (I) (wherein the amount of the inorganic dispersing agent and the amount of the polymerizable monomer in the right-hand member of the equation (I) are each an amount introduced in the production of resin particles, and the amount of the polymerizable monomer is 100 parts by weight) .

[Fig.2]

S4800 0.8kV 8.2mm x1.00k SE(M) 2009/11/09 18:36     50.0um

**Description**

Technical Field

The present invention relates to resin particles and a process for producing the same. More particularly, the present invention relates to resin particles having uniform particle diameters and a process for producing the same.

Background Art

Resinparticles are widely used for optical materials, cosmetics, additives to molding resins or coating materials, etc. In these uses, resin particles having properties of uniform particle diameters are desired.

As production processes to obtain resin particles of uniform particle diameters, a production process wherein resin particles havingaparticle size distribution of wide range, which have been produced by suspension polymerization and spray polymerization, are classified, a production process wherein seed particles having been controlled in their particle diameters are used in seed polymerization and the seeds are swollen to obtain a given particle size distribution, etc. are disclosed. Each of these production processes, however, needs plural steps and requires much cost and work.

In order to solve these problems, it has been studied that the dispersedstate or the surface condition of oil droplets containing a polymerizable monomer is controlled in a reaction system in suspension polymerization to obtain resin particles having uniform particle diameters. For example, a process wherein aqueous suspension polymerization is carried out in the presence of colloidal silica as a suspension stabilizer and a halide of an alkali metal (see patent literature 1), a process wherein suspension polymerization is carried out in the presence of a hydrophobic inorganic oxide, a hydrophilic organic compound and a water-soluble neutral salt (see patent literature 2) and a process wherein suspension polymerization is carried out in the presence of a suspending agent (see patent literature 3) are known.

In these processes, however, treatment of a reaction liquid is a problem because the polymerization system contains a metal. Further, unless the amount of an inorganic compound added, such as silica, is a given amount or more, any effect is not obtained, and therefore, silica that has adhered to the surfaces of the resulting resin particles sometimes becomes an obstacle to the subsequent processing.

Citation List

Patent Literature

Patent literature 1: Japanese Patent Laid-Open Publication No. 217645/2007
Patent literature 2: Japanese Patent Laid-Open Publication No. 355639/2000
Patent literature 3: Japanese Patent Laid-Open Publication No. 16707/1994

Summary of Invention

Technical Problem

Accordingly, it has been desired to obtain resin particles having good processability and having uniform particle diameters by more efficiency dispersing and stabilizing oil droplets containing a polymerizable monomer in suspension polymerization.

It is an object of the present invention to obtain resin particles having a small amount of an inorganic dispersing agent (such as silica) adhering to their surfaces and having uniform particle diameters. It is another object of the present invention to decrease the amount of a metal in a waste liquid formed in the production of the particles.

Solution to Problem

The present invention includes, for example, the following [1] to [9].

[1] Resin particles having an inorganic dispersing agent adhering to their surfaces and having a volume mean particle diameter of 1 to 1000 $\mu$m, wherein:

the amount of the inorganic dispersing agent adhering to the resin particle surfaces is in the range of 0.0001 to 0.02 g/m$^2$, said amount being determined by the following equation (I):

Amount of inorganic dispersing agent adhering to resin particle surfaces = (amount of inorganic dispersing agent (part(s) by weight)/amount of polymerizable monomer (part(s) by weight))/resin particle specific surface area as measured by Mastersizer 2000 manufactured by Malvern Instruments Ltd. (I)

wherein the amount of the inorganic dispersing agent and the amount of the polymerizable monomer in the right-hand member of the equation (I) are each an amount introduced in the production of resin particles, and the amount of the polymerizable monomer is 100 parts by weight.

[2] The resin particles as stated in [1], which have a CV value of 10 to 50%.
[3] The resin particles as stated in claim [1] or [2], wherein the eluted halogen concentration based on the resin particles is less than 24 ppm.
[4] The resin particles as stated in any one of [1] to [3], wherein the eluted metal concentration based on the resin particles is less than 20 ppm.
[5] The resin particles as stated in any one of [1] to [4], wherein the inorganic dispersing agent is silica.
[6] A process for producing resin particles, comprising:

[step 1]: a step of stirring a composition containing an aqueous medium, apolymerizablemonomer, a polymerization initiator, aninorganic dispersing agent and an emulsifying agent to form a liquid in which oil droplets are dispersed in the aqueous medium, and
[step 2]: a step of heating the dispersion with stirring to polymerize the polymerizable monomer.

[7] Theprocess forproducingresinparticles as stated in [6], wherein in the step [1], the inorganic dispersing agent is used in an amount of 0.01 to 2.0 parts by weight based on 100 parts by weight of the polymerizable monomer.
[8] The process for producing resin particles as stated in [6] or [7], wherein in the step [1], the inorganic dispersing agent has a mean primary particle diameter of 1 to 500 nm before it is added to the system.
[9] The process forproducingresinparticles as stated in any one of [6] to [8], wherein the inorganic dispersing agent is colloidal silica.

Advantageous Effects of Invention

According to the present invention, resin particles having uniform particle diameters can be obtained. Further, the resulting resin particles have a low adhesion ratio of an inorganic dispersing agent such as silica on the surfaces and are excellent in redispersibility. When resin products containing the resin particles are used as optical sheet members, they have excellent luminance and are suitable for various working. Moreover, the amounts of a metal-containing compound and a halogen-containing compound used in the production process are small, so that the concentrations of those compounds in a waste liquid are low, and evil influence on the environment can be reduced.

Brief Description of Drawings

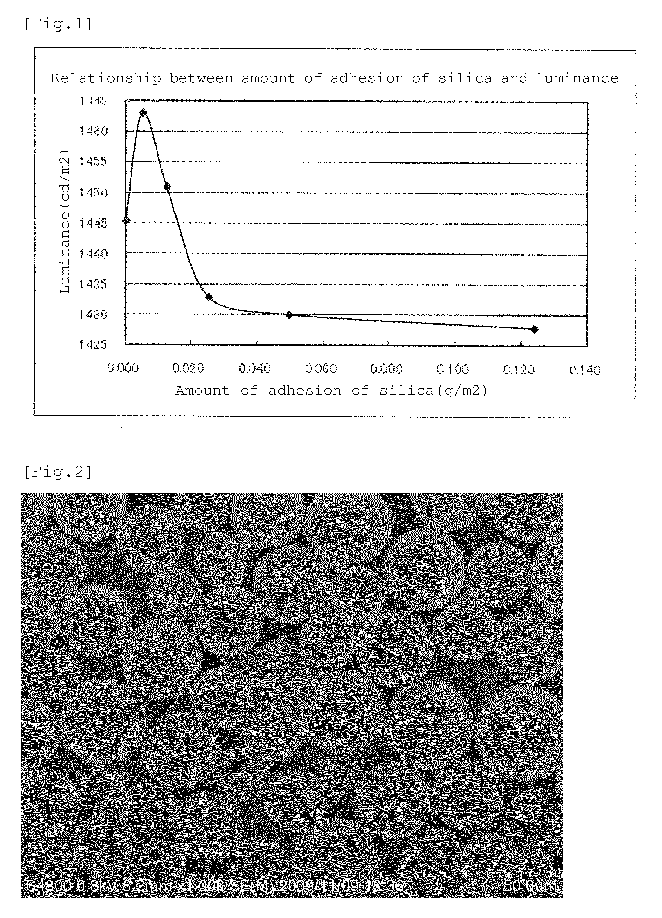

Fig. 1 shows a relationship between an amount of silica adhering to the resin particle surfaces (calculated value based on MS specific surface area) and luminance.
Fig. 2 is a SEM photograph of resin particles of the present invention.

Description of Embodiments

The present invention is described in detail hereinafter.
The resin particles of the present invention are preferably produced using suspension polymerization.
The process for producing resin particles of the present invention comprises:

[step 1]: a step of stirring a composition containing an aqueous medium, a polymerizable monomer, a polymerization initiator, an inorganic dispersing agent and an emulsifying agent to form a liquid in which oil droplets are dispersed in the aqueous medium, and

[step 2]: a step of heating the dispersion with stirring to polymerize the polymerizable monomer.

The process of the present invention preferably comprises, between the [Step 1] and the [Step 2],

[step 1-1]: a step comprising adding a dispersion stabilizer to the dispersion and stirring them.

By subj ecting the resinparticles obtained by the above production process to a medium removal step, such as suction filtration, centrifugal separation or washing with crossflow washing device, a drying step, such as tray drying, vacuum drying or spray drying, a pulverization step, etc., desired resin particles can be obtained. In order to make the resin particle diameters more uniform, a classification step may be combined, when needed.

(1) [Step 1]: step of stirring a composition containing an aqueous medium, a polymerizable monomer, a polymerization initiator, aninorganic dispersing agent and an emulsifying agent to form a liquid in which oil droplets are dispersed in the aqueous medium

In the step (1), the polymerizable monomer, the polymerization initiator, the inorganic dispersing agent, the emulsifying agent and other arbitrary components are dispersed in the aqueous medium in an inert gas atmosphere by means of stirring force or shear force using a device having stirring blade rotation function, a homomixer, an ultrasonic dispersing machine or the like, whereby a dispersion in which oil droplets have been formed in the aqueous medium is obtained.

In the step 1, the stirring rate is preferably in the range of 2 to 25 m/s in terms of a peripheral velocity of the stirring blade edge part, and the stirring time is preferably in the range of 1 to 60 minutes. The stirring is preferably carried out at a temperature at which the polymerizable monomer is not polymerized, usually at room temperature.

Polymerizable monomer

The polymerizable monomer used for producing the resin particles of the present invention is not specifically restricted as long as it can form oil droplets in the dispersed state in the aqueous medium.

Examples of the polymerizable monomers include (meth) acrylic acid-based monomers, styrene-based monomers, functional group-containing monomers, polyfunctional monomers, conjugated diene-basedmonomers, monomers that formpolyurethane resins, and polyols. Of these, (meth) acrylic monomers and styrene-based monomers capable of easily producing spherical resin particles are preferable. More specifically, there can be mentioned the following monomers, without limiting thereto.

Examples of the (meth)acrylic acid-based monomers include:

(meth) acrylic acid alkyl esters, such as methyl (meth)acrylate, ethyl (meth)acrylate, propyl (meth)acrylate, butyl (meth)acrylate, pentyl (meth)acrylate, hexyl (meth)acrylate, 2-ethylhexyl (meth)acrylate, octyl (meth)acrylate, nonyl (meth)acrylate, decyl (meth)acrylate and dodecyl (meth)acrylate;
(meth) acrylic acid aryl esters, such as phenyl (meth)acrylate and benzyl (meth)acrylate;
(meth)acrylic acid alkoxyalkyl esters, such as methoxyethyl (meth)acrylate, ethoxyethyl (meth)acrylate, propoxyethyl (meth)acrylate, butoxyethyl (meth)acrylate and ethoxypropyl (meth)acrylate;
(meth) acrylic acid, and salts, such as (meth) acrylic acid alkali metal salts; and
(meth) acrylic acid esters of alicyclic alcohols, such as cyclohexyl (meth)acrylate.

Examples of the styrene-based monomers include styrene, alkylstyrenes, such as methylstyrene, dimethylstyrene, trimethylstyrene, ethylstyrene, diethylstyrene, triethylstyrene, propylstyrene, butylstyrene, hexylstyrene, heptylstyrene and octylstyrene, fluorostyrene, chlorostyrene, bromostyrene, dibromostyrene, chloromethylstyrene, styrene iodide, nitrostyrene, acetylstyrene, methoxystyrene, ce-methylstyrene and vinyltoluene.

Examples of the functional group-containing monomers include:

oxazoline group-containing polymerizable compounds, such as 2-vinyl-2-oxazoline, 2-vinyl-5-methyl-2-oxazoline and 2-isopropenyl-2-oxazoline;
aziridine group-containing polymerizable compounds, such as (meth)acryloyl aziridine and 2-aziridinylethyl (meth) acrylate;
epoxy group-containing vinyl monomers, such as allyl glycidyl ether, (meth) acrylic acidglycidyl ether and (meth)acrylic acid2-ethyl glycidyl ether:

hydroxyl group-containing vinyl compounds, such as 2-hydroxyethyl (meth)acrylate, 2-hydroxypropyl (meth)acrylate, 2-hydroxybutyl (meth)acrylate, monoester of (meth) acrylic acid and polypropylene glycol or polyethylene glycol, and adducts of lactones with 2-hydroxyethyl (meth)acrylate;

fluorine-containing vinyl monomers, such as fluorine-substituted (meth)acrylic acid alkyl esters;

carboxyl group-containing vinyl monomers, e.g., unsaturated carboxylic acids, such as (meth)acrylic acid, itaconic acid, crotonic acid, maleic acid and fumaric acid, and salts, (partial) ester compounds and acid anhydrides of these acids;

reactive halogen-containing vinyl monomers, such as 2-chloroethyl (meth)acrylate, 2-chloroethyl vinyl ether, vinyl monochloroacetate and vinylidene chloride;

amide group-containing vinyl monomers, such as (meth)acrylamide, N-methylol (meth)acrylamide, N-methoxyethyl (meth)acrylamide and N-butoxymethyl (meth)acrylamide;

organic silicon-containing vinyl compound monomers, such as vinyltrimethoxysilane, 3-methacryloxypropyltrimethoxysilane, allyltrimethoxysilane, trimethoxysilylpropylallylamine and 2-methoxyethoxytrimethoxysilane;

macromonomers, such as substances having a radical-polymerizable vinyl group at the end of copolymerization products of the above monomers (e.g., fluorine-based macromonomers, silicon-containingmacromonomers, urethane-based macromonomers);

acrylonitrile; and vinyl acetate.

Examples of the polyfunctional monomers include:

bifunctional monomers, such as ethylene glycol di (meth) acrylate, triethylene glycol di(meth)acrylate, tetraethylene glycol di (meth) acrylate, diethylene glycol di (meth) acrylate, polyoxyethylene di(meth)acrylate, neopentyl glycol di (meth)acrylate, 1,4-butanediol di(meth)acrylate, 1,6-hexanediol di(meth)acrylate, 1,9-nonanediol di(meth)acrylate and divinylbenzene;

trifunctional monomers, such as trimethylolpropane triacrylate, trimethylolethane tri(meth)acrylate, pentaerythritol tri(meth)acrylate, dipentaerythritol tri(meth)acrylate, ethoxylated trimethylolpropane tri(meth)acrylate, propoxylated trimethylolpropane tri(meth)acrylate and tris-(2-(meth)acryloxyethyl isocyanurate);

tetra- or higher functional monomers, e.g., tetra(meth)acrylate compounds, such as pentaerythritol tetra(meth)acrylate, ethoxylated pentaerythritol tetra(meth)acrylate, propoxylated pentaerythritol tetra(meth)acrylate, dipentaerythritol tetra(meth)acrylate, ethoxylated dipentaerythritol tetra(meth)acrylate, propoxylated dipentaerythritol tetra (meth)acrylate, ditrimethylolpropane tetra(meth)acrylate, ethoxylated ditrimethylolpropane tetra(meth)acrylate and ethoxylated ditrimethylopropane tetra(meth)acrylate;

adducts obtained by addition reaction of diisocyanate compounds having an aliphatic group between diisocyanates, such as hexamethylene diisocyanate, trimethylhexamethylene diisocyanate, diisocyanate methylcyclohexane, isophorone diisocyanate and methylenebis (4-cyclohexyl isocyanate), or diisocyanate compounds having an aromatic group, such as diisocyanate methylbenzene and 4,4-diphenylmethane diisocyanate, with glycidol di (meth)acrylate; dipentaerythritol penta(meth)acrylate, and dipentaerythritol hexa(meth)acrylate.

Examples of the conjugated diene-based monomers include butadiene, isoprene and chloroprene.

As the monomers that form polyurethane resins, polyols containing glycol as a main component and diisocyanate raw materials are employable, and examples thereof include aromatic diisocyanates, such as 2,4-tolylene diisocyanate, 2,6-tolylene diisocyanate and p-phenylene diisocyanate, aliphatic diisocyanates, and bifunctional isocyanate-terminated urethane prepolymers.

Examples of the polyols include diol compounds, such as ethylene glycol and diethylene glycol, and polyether glycols.

The above monomers may be used singly or may be used as a mixture of plural kinds.

Polymerization initiator

In the production of the resin particles of the present invention, it is preferable to use polymerization initiator. As the polymerization initiator, a radical polymerization initiator is preferable. Examples of such radical polymerization initiators include organic peroxides, azo-based initiators and other radical polymerization initiators.

Examples of the organic peroxides used herein include cumene hydroperoxide (CHP), di-tert-butyl peroxide, dicumyl peroxide, benzoyl peroxide (BPO), lauroyl peroxide (LPO), dimethylbis(tert-butylperoxy)hexane, dimethylbis(tert-butylperoxy)hexyne-3, bis(tert-butylperoxyisopropyl)benzene,

bis(tert-butylperaxy)trimethylcyclohexane,
butyl-bis(tert-butylperoxy)valerate, 2-ethylhexaneperoxy acid tert-butyl ester, dibenzoyl peroxide, paramenthane hydroperoxide and tert-butyl peroxybenzoate.

Examples of the azo-based initiators include 2,2-azobisisobutyronitrile, 2,2-azobis-2-methylbutyronitrile, 2,2-azobis-2,4-dimethylvalronitrile, 2,2-azobis-4-methoxy-2,4-dimethylvaleronitrile, methyl 2,2-azobis(2-methylpropionate) and 2,2-azobis(2-methylpropionamidine) .dihydrochloride.

Inorganic dispersing agent

Examples of the inorganic dispersing agents used for producing the resin particles of the present invention include silica, titanium oxide and alumina. Of the inorganic dispersing agents, silica is preferable from the viewpoint that it has a refractive index close to that of the resin particles and has no evil influence on the optical performance.

As the silica, colloidal silica is preferably used because it has small particle diameters of nano order and is dispersed in water as primary particles. The mean primary particle diameter of the colloidal silica before addition to the reaction system is preferably in the range of 1 to 500 nm, more preferably 1 to 200 nm.

When the mean primary particle diameter of the colloidal silica is in the above range, resin particles having uniform particle diameters canbe obtained. As the mean primary particle diameter of the colloidal silica is decreased, the function of the colloidal silica as an inorganic dispersing agent becomes higher, and an effect to stabilize oil droplets canbe easily obtained. However, if the mean primary particle diameter is smaller than the lower limit of the above range, the colloidal silica becomes very expensive and is not economical. Even if colloidal silica having a mean primary particle diameter larger than the upper limit of the above range is used, an effect to stabilize oil droplets that is higher than that obtained by the use of colloidal silica having a mean primary particle diameter within the range defined by the present invention is not obtained.

Emulsifying agent

In order to disperse the above components in the aqueous medium, an emulsifying agent is used in addition to the inorganic dispersing agent in the production of the resin particles of the present invention. Examples of the emulsifying agents include polymeric dispersing agents, nonionic surface active agents and ionic surface active agents.

Examples of the polymeric dispersing agents include proteins (e.g., gelatin); lecithin; water-soluble rubbers, such as gum arabic and tragacanth gum; sodium alginate; cellulose derivatives, such as carboxymethyl cellulose, ethoxy cellulose and hydroxypropylmethyl cellulose; starch and its derivatives; polyvinyl alcohol; polyvinylpyrrolidone; polyoxyethylene alkyl ether, polyoxyethylene alkylphenyl ether, polyoxyethylene lauryl ether, polyethylene glycol fatty acid ester, polyvinyl alcohol, polyvinyl alcohol-based graft polymers (polymers on which polyvinylpyrrolidone and its derivatives have been grafted) ; sorbitan fatty acid esters, such as sorbitan oleate, sorbitan stearate and sorbitan palmitate; and cetyl alcohol. Examples of the nonionic surface active agents include polyoxyethylene alkyl ethers, such as polyoxyethylene lauryl ether and polyoxyethylene stearyl ether; polyoxyalkylene derivates, such as polyoxyethylene alkylene alkyl ether; polyoxyalkylene alkenyl ether, polyoxyethylene alkylphenyl ether; sorbitan fatty acid esters, such as sorbitan monolaurate and sorbitan monostearate; polyoxyethylene sorbitan fatty acid esters, such as polyoxyethylene sorbitan monolaurate and polyoxyethylene sorbitan monooleate; polyoxyethylene sorbitol fatty acid esters, glycerol fatty acid esters; polyoxyethylene fatty acid esters, such as polyethylene glycol monolaurate and polyethylene glycol distearate; polyoxyethylene hardened castor oil , polyoxyethylene alkylamine, and alkyl alkanolamide. Examples of the anionic surface active agents include alkylsulfuric acid ester salts, such as sodium lauryl sulfate and ammonium lauryl sulfate; polyoxyethylene alkyl sulfuric acid ester salts, sodium dodecylbenzenesulfonate, sodium dialkylsulfosuccinate, ammonium polyoxyalkylene alkenyl ether sulfate, fatty acid salts, and sodium salt of naphthalenesulfonic acid formalin condensate. Examples of the cationic surface active agents include alkylamine salts, such as coconut amine acetate and stearylamine acetate; and quaternary ammonium salts, such as lauryl trimethyl ammonium chloride, stearyl trimethyl ammonium chloride, cetyl trimethyl ammonium chloride and alkylbenzyl dimethyl ammonium chloride. Examples of the amphoteric surface active agents include alkyl betaines and alkylamine oxides, such as stearyl betaine, lauryl betaine and lauryldimethylamine oxide.

Such emulsifying agents can be used singly or in combination.

From the viewpoint of waste liquid disposal, it is preferable that no metal is contained in the emulsifying agent or the metal content in the emulsifying agent is low.

Other arbitrary components

Other components, such as polymerization inhibitor, antioxidant, ultraviolet light absorber, anti-foaming agent, near infrared ray absorber, fluorescent brightener, and colorants, specifically pigment and dye, can be used, when needed.

Examples of the polymerization inhibitors include sodium nitrite and dibutyl hydroxytoluene. Examples of the antioxidants include hindered phenol-based antioxidants. Examples of the ultraviolet light absorbers include hindered amine-based light stabilizers, hindered amine-based polymerizable compounds and benzotriazole-based polymerizable compounds.

As the colorants, oil-soluble dyes or pigments that are more difficult to dissolve in water than in the monomer can be properly used.

Examples of the oil-soluble dyes include Solvent Blue 35, Solvent Red 132, Solvent Black 27 and Solvent Yellow 16, in terms of color index number (C.I.). Further, there can be also mentioned dyes that are usually used for, for example, cularine-based, azo-based, quinophthalone-based or phthalocyanine-based writing/recording liquids, leuco dyes that are used for thermal recording paper or used as heat-sensitive coloring materials, tar dyes that are used for cosmetics, etc. Moreover, a variety of direct dyes, acid dyes, basic dyes, azoic dyes, reactive dyes and fluorescent dyes, etc. can be also used.

Examples of pigments capable of being dispersed in the monomer include various inorganic and organic pigments, such as Permanent Yellow DHG, Pigment Red 57 :1, Lionol Blue 7027, carbon black, Black Pearls 430, titanium oxide, zinc oxide, red iron oxide and ultramarine.

<u>Composition in step 1</u>

The composition in the "step 1" in the production process for obtaining the resin particles of the present invention is a composition in which the aforesaid components are present in the following amounts in the aqueous medium. The following amounts are each based on 100 parts by weight of the total amount of all the monomers.

The amount of the inorganic dispersing agent is preferably in the range of 0.01 to 2.0 parts by weight, more preferably 0.05 to 1.0 part by weight. The amount of the emulsifying agent is preferably in the range of 0.0001 to 0.1 part by weight, more preferably 0.001 to 0.05 part by weight.

When the amount of each component is in the above range, resinparticles having an evenparticle size distribution can be obtained, andresinparticles havingdesiredproperties, such as the later-described resin particle surface adhesion ratio of the inorganic dispersing agent, can be obtained. A larger amount of the inorganic dispersing agent than the upper limit of the above range is undesirable from the viewpoints of stability of oil droplets and economy. If the amount thereof is smaller than the lower limit of the above range, an effect to stabilize oil droplets cannot be sufficiently obtained.

Examples of the aqueous media include water and a mixture of water and an alcohol.

The ratio of the total weight of the inorganic dispersing agent and the emulsifying agent to the weight of the aqueous medium is preferably in the range of 0.0011 to2.1/50 to 300, morepreferably 0.051 to 1.05/50 to 200.

When the weight ratio of the components is in the above range, resin particles having an even particle size distribution can be obtained, and resin particles having desired properties, such as the later-described resin particle surface adhesion ratio of the inorganic dispersing agent, can be obtained.

The amount of the initiator is preferably in the range of 0.05 to 5 parts by weight, more preferably 0.1 to 2 parts by weight.

(2) [Step 1-1]: step comprising adding a dispersion stabilizer to the dispersion and stirring them

The step 1-1 is carried out in an inert gas atmosphere. In this step, the stirring rate is preferably in the range of 2 to 25 m/s in terms of a peripheral velocity of the stirring blade edge part, and the stirring time is preferably in the range of 1 to 60 minutes. The stirring is preferably carried out at a temperature at which the polymerizable monomer is not polymerized, usually at room temperature. As the stirring means, the same means as in the step 1 can be mentioned.

<u>Dispersion stabilizer</u>

In the present invention, after oil droplets in the dispersed state that become particles of desired particle diameters are formed using the inorganic dispersing agent and the emulsifying agent, a dispersion stabilizer is preferably used in order to stabilize the resulting dispersion. The dispersion stabilizer can be selected from the aforesaid emulsifying agents, and of those, polymeric dispersing agents are preferable. In particular, polyvinyl alcohol and surface active agents such as polyoxyalkylene phenyl ether sulfuric acid salt are preferable because they have an excellent function to stabilize dispersed oil droplets, are inexpensive and are easy to use.

The amount of the dispersion stabilizer is preferably in the range of 0.1 to 5 parts by weight, more preferably 0. 2 to 2 parts by weight.

(3) [Step 2]: step of heating the dispersion with stirring to polymerize the polymerizable monomer

After the droplets comprising the polymerizable monomer and the polymerization initiator are dispersed, the dispersion is heated in an inert gas atmosphere with maintaining the dispersed state by stirring or the like to perform polymerization.

The stirring rate is preferably in the range of 0.2 to 2 m/s in terms of a peripheral velocity of the stirring blade edge part, and the heating temperature is preferably in the range of 50 to 80°C. The temperature is stepwise elevated, and the polymerization is accelerated at 80 to 95°C. The time taken from the beginning of the polymerization to the completion thereof is in the range of 1 to 10 hours, preferably 2 to 6 hours. As the stirring means, the same means as in the step 1 can be mentioned.

For forming urethane resin, condensation reaction is generally used.

(4) Resin particles

The resin particles obtained as above have the following properties.

(i) The volume mean particle diameter of the resin particles of the present invention is in the range of 1 to 1000$\mu$m, preferably 2 to 300$\mu$m. That the volume mean particle diameter of the res in particles of the present invention is the above value is correlated with various factors, such as selection of a polymerizable monomer and stirring rate. However, it is thought that obtaining of such an excellent value is attributable particularly to the amounts of the additives used in the suspension polymerization, such as inorganic dispersing agent and emulsifying agent. The resin particles having the above volume mean particle diameter do not include fine particles and coarse particles, and are favorably applied to various uses.

(ii) The specific surface area of the resin particles of the present invention is preferably in the range of 0.01 to 6.0 $m^2/g$, more preferably 0.02 to 3.0 $m^2/g$. That the specific surface area of the resin particles of the present invention is the above value is correlated with various factors, such as selection of a polymerizable monomer and stirring rate. However, it is thought that obtaining of such an excellent value is attributable particularly to the amounts of the additives used in the suspension polymerization, such as inorganic dispersing agent and emulsifying agent. The resin particles having the above specific surface area do not include fine particles and coarse particles, and are favorably applied to various uses.

(iii) TheCVvalueof theresinparticles of the present invention is preferably in the range of 10 to 50%, more preferably 10 to 40%. Here, the CVvalue is a value determined by 100 x standard deviation of particle diameters/number mean particle diameter. That the CV value of the resin particles of the present invention is the above value is correlated with various factors, such as selection of a polymerizable monomer and stirring rate. However, it is thought that obtaining of such an excellent value is attributable particularly to the amounts of the additives used in the suspension polymerization, such as inorganic dispersing agent and emulsifying agent. The resin particles having the above CV value do not include fine particles and coarse particles, and are favorably applied to various uses.

(iv) To the resin particle surfaces, the inorganic dispersing agent adheres.

The amount of the inorganic dispersing agent adhering to the resin particle surfaces, as calculated from the following equation (I), is in the range of 0.0001 to 0.02 $g/m^2$, preferably 0.0005 to 0.015 $g/m^2$.

```
     Amount of inorganic dispersing agent adhering to resin particle

surfaces = (amount of inorganic dispersing agent (part(s) by

weight)/amount of polymerizable monomer (part(s) by weight))/resin

particle specific surface area as measured by Mastersizer 2000 manufactured by Malvern Instruments Ltd.          (I)
```

wherein the amount of the inorganic dispersing agent and the amount of the polymerizable monomer in the right-hand member of the equation (I) are each an amount introduced in the production of resin particles, and the amount of the polymerizable monomer is 100 parts by weight.

The amount of adhesion is a value calculated on the assumption that the whole inorganic dispersing agent was adsorbed on the surfaces of the resin particles.

That the amount of adhesion of the inorganic dispersing agent is in the above range is thought to be greatly attributable to the amounts of the additives, such as inorganic dispersing agent and emulsifying agent. In the resin particles having the above amount of adhesion of the inorganic dispersing agent, troubles caused by the inorganic dispersing agent present on the resin surfaces are suppressed duringprocessing, and the resin particles are favorably applied to various uses.

It is thought that the actual amount of adhesion is not more than the calculated value.

(v) The eluted halogen concentration based on the resin particles is preferably less than 24 ppm, more preferably less than 20 ppm, particularly preferably 0 to 10 ppm. The reason why the amount of halogen on the resin particle surfaces is in the above range is thought to be that the amount of the halogen-containing compound used in the production process is small. When the amount of halogen on the resin surfaces is in the above range, evil influence of waste liquid on the environment can be suppressed. The above concentration value is a value based on 100 g of the resin particles.

(vi) The eluted metal concentration based on the resin particles is preferably not more than 20 ppm, more preferably 0 to 10 ppm. The reason why the amount of a metal on the resin particle surfaces is in the above range is thought tobe that the amount of themetal-containing compound used in the production process is small. When the amount of a metal on the resin surfaces is in the above range, evil influence of waste liquid on the environment can be suppressed. The above concentration value is a value based on 100 g of the resin particles.

(vii) The luminance of an acrylic resin sheet containing the resin particles of the present invention is higher by not less than 0.1% than the luminance of an acrylic resin sheet containing resin particles having no inorganic dispersing agent adhering to the resin particle surfaces in the same concentration. The reason why luminance of such a value is obtained is thought to be that the amount of the inorganic dispersing agent (such as silica) adhering to the surfaces of the resin particles of the present invention is small. When the luminance is in the above range, such sheets can be more favorably used as light diffusion sheets, light diffusion plates, antiglare films, etc.

(viii) As the solvent redispersibility of the resin particles of the present invention, the number of revolutions required for complete redispersing of the resin particles in methyl ethyl ketone is preferably in the range of 1 to 55, more preferably 1 to 45. The reason why such a value is obtained as redispersibility of the resin particles in the solvent is thought to be that the amount of the inorganic dispersing agent (such as silica) adhering to the surfaces of the resin particles of the present invention is in the range defined by the present invention, as previously described. When the redispersibility in the solvent is in the above range, it becomes possible to redisperse particles which have been sedimented with time. Therefore, formation of agglomerated particles can be inhibited, and troubles caused by sedimentation of the particles or the like are reduced. Moreover, such resin particles have advantages such as ease of handling, and they are more favorably used for light diffusion sheets, antiglare films, coating materials, etc.

(5) Behaviors of inorganic dispersing agent in reaction system

As the reason why the resin particles of the present invention have the above properties, the following reason can be considered.

It is thought that in the dispersion, the inorganic dispersing agent surrounds oil droplets containing the polymerizable monomer to form a structure in which the inorganic dispersing agent is adsorbed on the interfaces of the oil droplets, whereby the interfacial potential between the aqueous medium and the oil droplets is stabilized. That is to say, it is thought that by virtue of the inorganic dispersing agent, theelectricpotential of the oil droplets is changed and stabilized. For such stabilization, however, a large amount of an inorganic dispersing agent is necessary.

That the amount of the inorganic dispersing agent added to the reaction system is small and the amount of the inorganic dispersing agent adhering to the resin particle surfaces is small in the present invention is thought to be attributable to the interaction between the inorganic dispersing agent and the emulsifying agent. Also the emulsifying agent controls the electric potential at the interfacebetween the aqueous medium and the oil droplets. It is thought that the emulsifying agent not only acts on the electric potential of the oil droplet surfaces together with the inorganic dispersing agent but also controls the electric potential of the inorganic dispersing agent, and has influence on the adsorbed state of the inorganic dispersing agent on the oil droplets. Moreover, it is thought that the emulsifying agent also controls agglomeration and dispersion of the inorganic dispersing agent.

That is to say, it is thought that if the amount of the emulsifying agent is too large, the inorganic dispersing agent undergoes secondary agglomeration, and the amount of the inorganic dispersing agent adsorbed on the oil droplet surfaces is decreased, so that itbecomes difficult to control the particle diameters and the particle size distribution (amount of fine or coarse particles produced).

On the other hand, even if the emulsifying agent is added in an extremely slight amount, it can change the electric potential of the inorganic dispersing agent and acts on the electric potential of the oil droplet surfaces together with the inorganic dispersing agent.

Therefore, it is thought that by adjusting the amounts of the inorganic dispersing agent and the emulsifying agent to those in the ranges defined by the present invention, the inorganic dispersing agent is present in the state of neither secondary agglomerates nor primary particles (regarded as pseudo-agglomerated state) in the system and stabilizes the oil droplets. It is thought that in this pseudo-agglomerated state, the inorganic dispersing agent undergoes reversible change between the state of secondary agglomerates and the state of primary particles.

However, since the electric potential is concerned with the effect of the emulsifying agent, the adsorbed state varies depending upon the polarity of the emulsifying agent. On that account, the optimum amount of the emulsifying agent added varies depending upon its polarity.

It is thought that by using the inorganic dispersing agent and the emulsifying agent in combination in the amounts defined by the present invention, a proper amount of the inorganic dispersing agent is adsorbed on the oil droplets containing the polymerizable monomer in the reaction system, and the oil droplets are stabilized while maintaining almost uniform sizes of the oil droplets.

(6) Uses

The resulting resin particles can be used for cosmetics, optical materials, molding resins, prevention of blocking of films, coating materials, etc.

Examples

The present invention is further described with reference to the following examples, but it should be construed that the present invention is in no way limited to those examples.

Measuring methods

Numerical values in this specification and the examples were determined by the following measuring methods.

<Evaluation 1: Volume mean particle diameter and specific surface area of resin particles>

Preparation of test sample: 0.25 g of resin particles obtained in the example were weighed, and a system wherein 0.025 g of sodium dodecylbenzenesulfonate and 50 g of pure water had been added to the resin particles was subjected to dispersing for 10 minutes using an ultrasonic dispersing machine (name of device: ULTRASONIC HOMOGENIZER UH-50, manufactured by SMT Co., Ltd., frequency: 20 kHz) to obtain a test sample.

Volume mean particle diameter and specific surface area of the test sample were measured by the use of the following measuring device under the following measuring conditions.

Measuring device: Mastersizer 2000 (laser diffraction type particle size distribution measuring device), manufactured by Malvern Instruments Ltd.

Measuring conditions:

Dispersionmedium: water, analytical model: general purpose type, refractive index of particles: 1.50, refractive index of dispersion medium: 1.33

As the volume mean particle diameter, D (4.3) (volume-based mean diameter) obtained under the measuring conditions described was used.

<Evaluation 2: Amount of adhesion of inorganic dispersing agent based on resin particle surface area (calculated value based on MS specific surface area)>

The amount of adhesion was determined by the following equation.

```
Amount of inorganic dispersing agent adhering to resin particle

surfaces (calculated value based on MS specific surface area) = (amount

of inorganic dispersing agent (part(s) by weight)/amount of polymerizable

monomer (part(s) by weight))/resin particle specific surface area as measured by Mastersizer 2000 manufactured by Malvern Instruments Ltd.

                  (I)
```

wherein the amount of the inorganic dispersing agent and the amount of the polymerizable monomer in the right-hand member of the equation (I) are each an amount introduced in the production of resin particles, and the amount of the polymerizable monomer is 100 parts by weight.

<Evaluation 3: CV value>

Preparation of test sample: 0.25 g of resin particles obtained in the example were weighed, and a system wherein 0.05 g of sodium dodecylbenzenesulfonate and 50 g of pure water had been added to the resin particles was subjected to dispersing for 10 minutes using an ultrasonic dispersing machine to obtain a test sample.

(i) Case of volume mean particle diameter of test sample being not more than 75 $\mu$m

Measuring device: FPIA3000 (flow type particle image analytical device), manufactured by Sysmex Corporation

Measuring conditions: In the case of particle diameters of not less than 10 $\mu$m, measurement was carried out in LPF mode, and in the case of particle diameters of not more than 10 $\mu$m, measurement was carried out in HPF mode. The number of particles subjected to the measurement was 50,000. The analysis was carried out in terms of the equivalent circle diameter (on the basis of the number of particles), and a CV value determined in the analysis was used.

(ii) Case of volume mean particle diameter of test sample being more than 75 $\mu$m

Particle diameters of 50 particles photographed by a digital microscope (manufactured by Keyence Corporation) with 450 magnifications were actually measured, and standard deviation thereof was used to obtain a Cv value.

<Evaluation 4: Chlorine concentrataon>

Extraction method: A filtrate obtained by dispersing 100 g of resin particles obtained in the example in 200 g of ultrapure water by the use of a shaker for 24 hours was filtered through a filter having a pore diameter of 0.2 $\mu$m to obtain a test sample.
Measuring device: 761 Compact IC, manufactured by Metrohm Ltd.
Measuring conditions:

   Column: Shodex IC SI-90 4E [4.0$\times$250 mm], mobile phase: 2.0 mM NaHCO/2. 0 mM NaCO, flow rate: 1.2 ml/min, column temperature: 20.0˚C Amount of test sample: 20.0 $\mu$l
   The measured concentration was converted to an elution concentration based on 100 g of the particles.

<Evaluation 5: Sodium concentration>

Extraction method: A filtrate obtained by dispersing 100 g of resin particles obtained in the example in 200 g of ultrapure water by the use of a shaker for 24 hours was filtered through a filter having a pore diameter of 0.2 $\mu$m to obtain a test sample.

Measuring device: inductively coupled plasma emission analytical method (ICP/AES) (VISTA-PRO, manufactured by OVARIAN Inc.)

Measuring conditions: Measurement was carried out by the inductively coupled plasma emission analytical method. (A standard sample (1000 ppm) for atomic absorption of Na was diluted with pure water, and concentrated hydrochloric acid was added to prepare a sample for calibration curve in the concentration range of 1 to 50 ppm. To the test sample, hydrochloric acid was added so that the concentration might become the same as that of the sample for calibration curve, and the Na concentration was measured by the above measuring device.)

The measured concentration was converted to an elution concentration based on 100 g of the particles.

<Evaluation 6: Luminance of resin particle-containing sample>

Preparation of coating liquid

1. 3 g of resin particles obtained in Example 1 and 4.45 g of toluene were weighed, and they were stirred 50 times using a stirring bar.
2. To the mixture, 2 g of an acrylic binder (U-245B available from Soken Chemical & Engineering Co., Ltd.) was added, and they were stirred 50 times using a stirring bar.
3. To the mixture, 0.88 g of a polyisocyanate-based curing agent was added, and they were stirred 50 times using a stirring bar to obtain a coating liquid.
4. Also with regard to resin particles obtained in Example 4, Comparative Examples 3, 7 and 8, and Reference Example 1, their respective coating liquids were obtained in the same manner as above.

Coating

Coating with the above coating liquids was carried out using an automatic coating machine.

Coating machine: Rk Print Coat Instruments Ltd.
Name of coating machine: K Control Coater 101
Bar: No. 3 (wet film thickness: 24 $\mu$m)
Coating rate: 5 cm/sec
Drying conditions: 80˚C, 3 minutes (temperature-controllable heat circulation type dryer)
Substrate: 100 $\mu$m PET

Measurement of Luminance

Luminance of the coated sample was measured by a luminance meter under the following conditions. The back light was set at 1200 cd/m2, and one sheet was placed thereon, followed by measurement.

Luminance meter (high-performance general-purpose luminance/color shift measuring system) : RISA-COLOR/CD8, manufactured by HE-LAND
Luminance measuring conditions: Measurement was carried out in a division system of total 100 blocks (10 blocks (lengthwise) x 10 blocks (crosswise)). The sample had a size of 6 cm x 4.5 cm, and a measuring range of 5.5 cm x 4 cm was set in the sample. The distance between the camera and the sample was 152 cm.

<Evaluation 7: Solvent redispersibility of resinparticles>

To 1.5 g of resin particles obtained in the example, 3.5 g of a methyl ethyl ketone solvent was added, and the resin particles were dispersed in the solvent in a 10 ml screw-cap sedimentation tube (outer diameter: 16.5 mm, height: 105 mm) and then allowed to stand still for 24 hours.
The sedimentation tube was set in an end-over-end rotation type stirrer Rotamix manufactured by ATR Inc. and rotated at 10 rpm.
The number of revolutions required for complete redispersing of the particles was measured.

<Evaluation 8: Mean primary particle diameter of inorganic dispersing agent>

Preparation of test sample: The inorganic dispersing agent was dispersed inpuri fiedwater as a dispersionmedium so that the concentration of the dispersing agent in the resulting dispersion might become 1% by weight when the particle diameters of the inorganic dispersing agent were less than 100 nm, or dispersed therein so that the concentration of the inorganic dispersing agent in the resulting dispersionmight become 0.1% by weight when the particle diameters thereof were not less than 100 nm. A volume mean particle diameter of the test sample was measured using the following measuring device under the following measuring conditions.

Measuring device: Zetasizer 3000HSA (manufactured by Malvern Instruments Ltd.), using disposable PP cell

Measuring conditions:

Measuring conditions: Auto, analytical mode: Contin, mean value of 2 measurement times; a Z mean particle diameter obtained under thesemeasuring conditions was regarded as a mean primary particle diameter of the inorganic dispersing agent.

<Evaluation9: Mean particle diameter of inorganic dispersing agent during dispersing>

Preparation of test sample: The emulsifying agent was dispersed in purified water as a dispersion medium so that the concentration of the emulsifying agent in the resulting dispersion might become that of the example or the comparative example. Thereafter, the inorganic dispersing agent was added so that the concentration of the dispersing agent in the resulting dispersion might become 1% by weight when the particle diameters of the inorganic dispersing agent were less than 100 nm, or added so that the concentration of the dispersing agent in the resulting dispersion might become 0.1% by weight when the particle diameters of the inorganic dispersing agent were less than 100 nm. Thus, a test sample was obtained. A volume mean particle diameter of the test sample was measured using the following measuring device under the following measuring conditions.

Measuring device: Zetasizer 3000HSA (manufactured by Malvern Instruments Ltd.)

Measuring conditions:

Measuring conditions: Auto, analytical mode: Contin, mean value of 2 measurement times; a Z mean particle diameter obtained under these measuring conditions was regarded as a mean particle diameter of the inorganic dispersing agent during dispersing.

<Evaluation 10: Redispersibility of inorganic dispersing agent>

Preparation of test sample: The emulsifying agent was dispersed in purified water as a dispersion medium so that the concentration of the emulsifying agent in the resulting dispersion might become that of the example or the comparative example. Thereafter, the inorganic dispersing agent was added so that the concentration of the inorganic dispersing agent in the resulting dispersion might become 1% by weight, whereby a dispersed state of the inorganic dispersing agent was obtained. Then, the dispersion was diluted to twice with purified water to obtain a sample for the confirmation of redispersing.
A volume mean particle diameter of the test sample was measured in the same manner as in Evaluation 9.

Example 1

In a four-neck flask equipped with a thermometer and a nitrogen feed pipe and having a volume of 1 liter, 140 g of methyl methacrylate (MMA), 60 g of trimethylolpropane triacrylate (TMPTA) and 1.0 g of lauroyl peroxide (LPO) as an initiator were introduced to perform dissolution. Next, 200 g of water, 0.4 g of colloidal silica (mean primary particle diameter: 9 nm) and 0.02 g of polyoxyethylene lauryl ether were weighed and added, and they were emulsified at 8000 rpm (11.7 m/s) at room temperature for 3 minutes by the use of a homomixer (T.K. Homomixer MARKII2.5 model, manufactured by Primix Corporation). To the emulsion, a solution obtained by dissolving 1.0 g of polyvinyl alcohol (trade name: PVA-420, available from Kuraray Co., Ltd.) as a dispersion stabilizer in 200 g of water was added. The mixture was stirred at 100 rpm (0.39 m/s) at room temperature using, as a stirring blade, a turbine blade having a diameter of 75 mm.
Subsequently, while maintaining the stirring device and the stirring rate conditions, the mixture was heated up to 60°C, and the mixture was subjected to reaction for 2 hours and then subjected to reaction at 90°C for 1 hour. The polymer particles were particles having a volume mean particle diameter of 15.4 μm. Next, the emulsion was dehydrated by suction filtration and dried with a tray dryer at 100°C for 5 hours. Subsequently, pulverization was carried out to obtain resin particles.

Examples 2, 3, 6 to 8, and 11 to 17

Resin particles were obtained in the same manner as in Example 1, except that the amounts of the polymerizable monomers, the dispersing agent and the emulsifying agent were changed to those described in Table 1.

Example 4

Resin particles were obtained in the same manner as in Example 1, except that the amounts of the polymerizable monomers, the dispersing agent and the emulsifying agent were changed to those described in Table 1, and the number of revolutions of the homomixer was changed to 4000 rpm (5.9 m/s).

Example 5

Resin particles were obtained in the same manner as in Example 1, except that the amounts of the polymerizable monomers, the dispersing agent and the emulsifying agent were changed to those described in Table 1, and the number of revolutions of the homomixer was changed to 2000 rpm (2.9 m/s).

Example 9

Resin particles were obtained in the same manner as in Example 1, except that polyoxyethylene lauryl ether was replaced with 0.004 g of lauryl trimethyl ammonium chloride.

Example 10

Resin particles were obtained in the same manner as in Example 1, except that polyoxyethylene lauryl ether was replaced with 0.04 g of stearyl betaine.

Example 18

2.5 g of 1,4-butanediol, 47.5 g of isocyanurate type polyisocyanate of hexamethylene diisocyanate as an isocyanate component, 0.0015 g of dibutytin dilaurate (trade name: Accelerator S, available from Soken Chemical & Engineering Co., Ltd.) as a catalyst and 32.5 g of methyl ethylketone (MEK) as a dilution solvent were mixed to prepare a prepolymer. The molar ratio of isocyanate to hydroxyl group was 5.0.

Resin particles were obtained in the same manner as in Example 1, except that 50 g of the prepolymer was used as a polymerizable monomer, the dispersing agent and the emulsifying agent were used as described in Table 1, the number of revolutions of the homomixer was changed to 4000 rpm (5.9 m/s), a solution obtained by dissolving 6 g of hydroxymethyl cellulose (trade name: Metolose 60SH-50, available from Shin-Etsu Chemical Co., Ltd.) instead of polyvinyl alcohol as a dispersion stabilizer in 200 g of water was used, the reaction temperature was changed to 60˚C, and the reaction time was changed to 4 hours.

Comparative Examples 1, 2 and 4

The same operation with the homomixer as in Example 1 was carried out using the polymerizable monomers, the dispersing agent and the emulsifying agent in the amounts described in Table 2. As a result, separation between the monomers and the aqueous phase took place immediately after the operation, and the emulsified state was broken. On that account, resin particles were not obtained.

Comparative Examples 3, 5, 7 and 8

Resin particles were obtained in the same manner as in Example 1, except that the amounts of the polymerizable monomers, the dispersing agent and the emulsifying agent were changed to those described in Table 2.

Comparative Example 6

In a four-neck flask equipped with a thermometer and a nitrogen feed pipe and having a volume of 1 liter, 140 g of methyl methacrylate (MMA), 60 g of trimethylolpropane triacrylate (TMPTA) and 1.0 g of lauroyl peroxide (LPO) as an initiator were introduced to perform dissolution. Next, the resulting solution was mixed with 403 g of a solution obtained by dissolving 3 g of polyvinyl alcohol (trade name: PVA-420, available from Kuraray Co., Ltd.) as a dispersion stabilizer in 400 g of water, and the mixture was emulsified at 4500 rpm (6.6 m/s) at room temperature for 3 minutes by the use of a homomixer (T.K. Homomixer MARKII2.5 model, manufactured by Primix Corporation). The resulting mixture was stirred at 100 rpm (0.39 m/s) at room temperature using, as a stirring blade, a turbine blade having a diameter of 75 mm.

Subsequently, while maintaining the stirring device and the stirring rate conditions, the mixture was heated up to 60°C, and the mixture was subjected to reaction for 2 hours and then subjected to reaction at 90°C for 1 hour. The polymer particles were particles having a mean particle diameter of 15.5 $\mu$m. Next, the emulsion was dehydrated by suction filtration and dried with a tray dryer at 100°C for 5 hours. Subsequently, pulverization was carried out to obtain resin particles. The resulting resin particles had a CV value of 58.3% and had a wide particle size distribution.

Comparative Example 9

In a four-neck flask equipped with a thermometer and a nitrogen feed pipe and having a volume of 1 liter, 180 g of methyl methacrylate (MMA), 20 g of ethylene glycol dimethacrylate (EGDMA), 4 g of methyl polysilicate and 1 g of 2,2-azobis(2,4-dimethylvaleronitrile) as an initiator were introduced to perform dissolution. Next, the resulting solution was mixed with 160 g of water, 8.0 g of colloidal silica (1.6 nm) and 2 g of sodium chloride, and the mixture was emulsified at 7000 rpm (10.3 m/s) at room temperature for 3 minutes by the use of a homomixer (T.K. Homomixer MARKII2.5 model, manufactured by Primix Corporation) . To the emulsion, a solution obtained by dissolving 2 g of polyvinyl alcohol (trade name: PVA-420, available from Kuraray Co., Ltd.) as a dispersion stabilizer in 140 g of water was added. The resulting mixture was stirred at 100 rpm (0.39 m/s) at room temperature using, as a stirring blade, a turbine blade having a diameter of 75 mm.

Then, while maintaining the stirring device and the stirring rate conditions, the mixture was heated up to 65°C and subj ected to reaction for 2 hours. Subsequently, 0.4 g of sodium hydroxide was introduced, and the mixture was subjected to reaction at 95°C for 3 hours. The polymer particles were particles having a mean particle diameter of 15.4 $\mu$m. Next, the emulsion was dehydrated by suction filtration, then the resulting cake was redispersed in 300 g of ion-exchanged water, and the dispersion was dehydrated again by suction filtration. Thereafter, drying with a tray dryer was carried out at 100°C for 5 hours. Subsequently, pulverization was carried out to obtain resin particles.

Reference Examples 1

The same operations as in Example 1 were carried out using the formulation described in Table 2 to perform polymerization. For removing silica, 2 parts by weight of sodium hydroxide were added to the polymer liquid, and the mixture was maintained at 90°C for 2 hours with stirring. Thereafter, the polymer liquid was cooled, and the emulsionwas dehydrated by suction filtration. The resulting cake was redispersed in 300 g of ion-exchanged water, and the dispersion was dehydrated again by suction filtration. Thereafter, drying with a tray dryer was carried out at 100°C for 5 hours. Subsequently, pulverization was carried out to obtain resin particles. The amount of silica on the resulting resin particles was measured, and as a result, it was less than 5% when the weight of silica before the silica removal was taken as 100%.

Reference Example 2

The same operations as in Example 1 were carried out using the formulation described in Table 2 to obtain resin particles. The mean particle diameter of the resulting resin particles was 15.2, and the amount of adhesionof silica based on surface area was 0.0041g/m$^2$. However, the CV value was as wide as 61.3%, resulting in that the polymer particles included many fine and coarse particles. Although purified water was added to the polymer particles to attempt redispering, the inorganic dispersing agent did not exhibit primary particle diameters and was in a state of secondary agglomerates of not less than 500 nm, and sediment of agglomerates was observed.

[Table 1]

| (Unit) | Composition of resin (polymerizable monomers) | | | | | | | | | | Inorganic dispersing agent | | | | Emulsifying agent | |
|---|---|---|---|---|---|---|---|---|---|---|---|---|---|---|---|---|
| | MMA | TMPTA | BA | EGDMA | St | DVB | MAA | HEMA | HDDA | Pre-polymer | Type | Mean primary particle diameter | Amount added | | Amount added | |
| (Unit) | (g) | (g) | (g) | (g) | (g) | (g) | (g) | (g) | (g) | (g) | | (nm) | (g) | (part(s) by weight) | (g) | (part(s) by weight) |
| Ex. 1 | 140 | 60 | – | | – | – | – | – | – | – | silica | 9 | 0.4 | 0.2 | 0.02 | 0.01 |
| Ex. 2 | 140 | 60 | – | – | – | – | – | – | – | – | silica | 9 | 0.2 | 0.1 | 0.02 | 0.01 |
| Ex. 3 | 140 | 60 | – | – | – | – | – | – | – | – | silica | 9 | 1.6 | 0.8 | 0.04 | 0.02 |
| Ex. 4 | 140 | 60 | – | – | – | – | – | – | – | – | silica | 9 | 1.0 | 0.5 | 0.02 | 0.01 |
| Ex. 5 | 140 | 60 | – | – | – | – | – | – | – | – | silica | 9 | 0.1 | 0.05 | 0.02 | 0.01 |
| EX. 6 | 140 | 60 | – | – | – | – | – | – | – | – | silica | 62 | 0.2 | 0.1 | 0.03 | 0.015 |
| Ex. 7 | 140 | 60 | – | – | – | – | – | – | – | – | silica | 200 | 0.2 | 0.1 | 0.02 | 0.01 |
| Ex. 8 | 140 | 60 | – | – | – | – | – | – | – | – | silica | 450 | 0.6 | 0.3 | 0.06 | 0.03 |
| EX. 9 | 140 | 60 | – | – | – | – | – | – | – | – | silica | 9 | 0.4 | 0.2 | 0.004 | 0.002 |
| EX. 10 | 140 | 60 | – | – | – | – | – | – | – | – | silica | 9 | 0.4 | 0.2 | 0.04 | 0.02 |
| EX. 11 | – | – | 120 | 80 | – | – | – | – | – | – | silica | 9 | 0.4 | 0.2 | 0.04 | 0.02 |
| EX. 12 | – | – | – | – | 180 | 20 | – | – | – | – | silica | 9 | 0.4 | 0.2 | 0.04 | 0.02 |
| EX. 13 | 134 | 60 | – | – | – | – | 6 | – | – | – | silica | 9 | 0.4 | 0.2 | 0.02 | 0.01 |
| Ex. 14 | 134 | 60 | – | – | – | – | – | 6 | – | – | silica | 9 | 0.3 | 0.15 | 0.02 | 0.01 |
| Ex. 15 | 180 | – | – | – | – | – | – | – | 20 | – | silica | 9 | 0.2 | 0.1 | 0.03 | 0.015 |
| Ex. 16 | 140 | 60 | – | – | – | – | – | – | – | – | silica | 9 | 0.4 | 0.2 | 0.04 | 0.02 |
| Ex. 17 | 140 | 60 | – | – | – | – | – | – | – | – | silica | 9 | 0.8 | 0.4 | 0.04 | 0.02 |
| Ex. 18 | – | – | – | – | – | – | – | – | – | 50 | silica | 9 | 0.25 | 0.5 | 0.02 | 0.04 |

The amount added (part(s) by weight) is based on 100 parts by weight of the total weight of the polymerizable monomers.

[Table 1] (continued)

| | Resin particles | | | | | |
|---|---|---|---|---|---|---|
| | Volume mean particle diameter | Specific surface area | Amount of adhesion of inorganic dispersing agent based on surface area (calculated value based on MS specific surface area) | CV value | Chlorine | Na |
| (Unit) | (μm) | (m²/g) | (g/m²) | (%) | (ppm) | (ppm) |
| Ex. 1 | 15.4 | 0.451 | 0.0044 | 25.1 | 2.8 | 4 |
| Ex. 2 | 27.4 | 0.236 | 0.0042 | 25.7 | 2.4 | 2 |
| Ex. 3 | 4.7 | 1.650 | 0.0048 | 36.6 | 4.5 | 5 |
| Ex. 4 | 15.3 | 0.445 | 0.0112 | 26.7 | – | – |
| Ex. 5 | 130 | 0.050 | 0.0100 | 32.5 | – | – |
| Ex. 6 | 12.2 | 0.566 | 0.0018 | 28.1 | – | – |
| Ex. 7 | 12.1 | 0.565 | 0.0018 | 25.4 | – | – |
| Ex. 8 | 12.3 | 0.573 | 0.0052 | 26.0 | – | – |
| Ex. 9 | 16.2 | 0.402 | 0.0050 | 28.8 | – | – |
| Ex. 10 | 12.5 | 0.553 | 0.0036 | 22.8 | – | – |
| Ex. 11 | 13.5 | 0.508 | 0.0039 | 27.5 | – | – |
| Ex. 12 | 16.5 | 0.395 | 0.0101 | 22.2 | – | – |
| Ex. 13 | 23.1 | 0.323 | 0.0124 | 34.5 | – | – |
| Ex. 14 | 15.3 | 0.444 | 0.0068 | 28.8 | – | – |
| Ex. 15 | 16.3 | 0.419 | 0.0024 | 23.7 | – | – |
| Ex. 16 | 19.8 | 0.329 | 0.0043 | 29.1 | – | – |
| Ex. 17 | 12.8 | 0.516 | 0.0078 | 29.4 | – | – |
| Ex. 18 | 200 | 0.335 | 0.0149 | 38.1 | – | – |

[Table 2]

| (Unit) | Composition of resin (polymerizable monomers) | | | | | | | | | Inorganic dispersing agent | | | | Emulsifying agent | |
|---|---|---|---|---|---|---|---|---|---|---|---|---|---|---|---|
| | MMA | TMPTA | BA | EGDMA | St | DVB | MAA | HEMA | HDDA | Type | Mean primary particle diameter | Amount added | | Amount added | |
| (Unit) | (g) | (g) | (g) | (g) | (g) | (g) | (g) | (g) | (g) | | (nm) | (g) | (part(s) by weight) | (g) | (part(s) by weight) |
| Comp. Ex. 1 | 140 | 60 | – | – | – | – | – | – | – | Silica | 9 | 1.0 | 0.5 | 0 | 0 |
| Comp. Ex. 2 | 140 | 60 | – | – | – | – | – | – | – | Silica | 9 | 3.0 | 1.5 | 0 | 0 |
| Comp. Ex. 3 | 140 | 60 | – | – | – | – | – | – | – | Silica | 9 | 4.0 | 2 | 0 | 0 |
| Comp. Ex. 4 | 140 | 60 | – | – | – | – | – | – | – | Silica | 16 | 3.0 | 1.5 | 0 | 0 |
| Comp. Ex. 5 | 140 | 60 | – | – | – | – | – | – | – | Silica | 16 | 40 | 20 | 0 | 0 |
| Comp. Ex. 6 | 140 | 60 | – | – | – | – | – | – | – | PVA | – | 3.0 | 1.5 | – | – |
| Comp. Ex. 7 | 140 | 60 | – | – | – | – | – | – | – | Silica | 9 | 2.0 | 1 | 0.02 | 0.01 |
| Comp. Ex. 8 | 140 | 60 | – | – | – | – | – | – | – | Silica | 9 | 10 | 5 | 0 | 0 |
| Comp. Ex. 9 | 180 | – | – | 20 | – | – | – | – | – | Silica | 16 | 8.0 | 4 | – | – |
| Ref. Ex. 1 | 140 | 60 | – | – | – | – | – | – | – | Silica | 9 | 0.2 | 0.1 | 0.01 | 0.005 |
| Ref. Ex. 2 | 140 | 60 | – | – | – | – | – | – | – | Silica | 9 | 0.4 | 0.2 | 0.3 | 0.15 |

The amount added (part(s) by weight) is based on 100 parts by weight of the total weight of the polymerizable monomers.

EP 2 502 940 A1

18

Table 2 (continued)

| (Unit) | Volume mean particle diameter (μm) | Specific surface area (m²/g) | Resin particles | | | |
|---|---|---|---|---|---|---|
| | | | Amount of adhesion of inorganic dispersing agent based on surface area (calculated value based on MS specific surface area) (g/m²) | CV value (%) | Chlorine (ppm) | Na (ppm) |
| Comp. Ex. 1 | - | - | - | - | - | - |
| Comp. Ex. 2 | - | - | - | - | - | - |
| Comp. Ex. 3 | 14.9 | 0.472 | 0.0424 | 37.1 | - | - |
| Comp. Ex. 4 | - | - | - | - | - | - |
| Comp. Ex. 5 | 8.3 | 0.830 | 0.2410 | 36.5 | | |
| Comp. Ex. 6 | 15.5 | - | - | 58.3 | | |
| Comp. Ex. 7 | 15.3 | 0.436 | 0.0229 | 37.8 | - | - |
| Comp. Ex. 8 | 14.9 | 0.423 | 0.1182 | 43.2 | - | - |
| Comp. Ex. 9 | 22.6 | 0.315 | 0.1270 | 45.2 | 34.4 | 38 |
| Ref. Ex. 1 | 15.4 | 0.451 | 0.0002> | 25.1 | - | - |
| Ref. Ex. 2 | 15.2 | 0.489 | 0.0041 | 61.3 | - | - |

Table 3 Redispersibility of resin particles

| Particles | Amount of adhesion of silica based on surface area (calculated value based on MS specific surface area) | MEK redispersibility |
|---|---|---|
| | (g/m²) | (Number of revolutions) |
| Ex. 1 | 0.0044 | 36 |
| Ex. 4 | 0.0112 | 43 |

(continued)

| Particles | Amount of adhesion of silica based on surface area (calculated value based on MS specific surface area) | MEK redispersibility |
|---|---|---|
| | (g/m$^2$) | (Number of revolutions) |
| Coop. Ex. 3 | 0.0424 | 72 |
| Comp. Ex. 7 | 0.0229 | 48 |
| Comp. Ex. 8 | 0.1182 | 111 |
| Ref. Ex. 1 | 0.0002> | 47 |

[Table 4]

| Table 4 Evaluation of dispersed state of inorganic dispersing agent | | | |
|---|---|---|---|
| | Mean primary particle diameter (nm) | Particle diameter during dispersing (nm) | Mean particle diameter after redispersing (nm) |
| Ex. 1 | 9 | 13 | 9 |
| Ex. 4 | 9 | 10 | 9 |
| Ex. 6 | 62 | 70 | 62 |
| Ex. 16 | 9 | 490 | 20 |
| Ex. 17 | 9 | 29 | 12 |
| Ref. Ex. 2 | 9 | 500< | 500< |

Table 4 shows a dispersed state of the inorganic dispersing agent.

In Table 4, "during dispersing" indicates that the state of the inorganic dispersing agent in the polymerization system was imagined, and "after redispersing" indicates a state of the polymerization system diluted with water.

In the examples in which the particle diameter of the inorganic dispersing agent returned to the primary particle diameter after redispersing or in the examples in which the particle diameter of the inorganic dispersing agent during dispersing was different from that after redispersing, the agglomerated state of the inorganic dispersing agent in the polymerization system in the particle production of the present invention is thought to be a pseudo-agglomerated state. On that account, it is thought that the inorganic dispersing agent in the pseudo-agglomerated state undergoes reversible change between primary particles and secondary agglomerates and sometimes easily returns to primary particles. In such examples and reference examples, resin particles having uniform particle diameters anda low adhesion ratio of the inorganic dispersing agent on the surfaces were obtained.

On the other hand, in the examples in which the particle diameter of the inorganic dispersing agent did not return to the primary particle diameter after redispersing or in the examples inwhich the particle diameter of the inorganic dispersing agent during dispersing was not different from that after redispersing, the agglomerated state of the inorganic dispersing agent in the polymerization system in the particle production of the present invention is thought to be secondary agglomeration. When the dispersion in this case was visually observed, sediment could be confirmed. In such examples and reference examples, resin particles having non-uniform particle diameters and a high adhesion ratio of the inorganic dispersing agent on the surfaces were obtained.

Meanings of abbreviations in the tables are as follows.

MMA: methyl methacrylate
TMPAT: trimethylolpropane triacrylate
BA: butyl acrylate
EGDMA: ethylene glycol dimethacrylate
St: styrene
DVB: divinylbenzene
MAA: methacrylic acid
HEMA: 2-hydroxyethyl methacrylate

HDDA: 1,6-hexanediol diacrylate

Industrial Applicability

The resin particles of the present invention can be used for cosmetics, optical materials, molding resins, prevention of blocking of films, coating materials, etc.

**Claims**

1. Resin particles having an inorganic dispersing agent adhering to their surfaces and having a volume mean particle diameter of 1 to 1000 $\mu$m, wherein:

   the amount of the inorganic dispersing agent adhering to the resin particle surfaces is in the range of 0.0001 to 0.02 g/m$^2$, said amount being determined by the following equation (I):

   Amount of inorganic dispersing agent adhering to resin particle surfaces = (amount of inorganic dispersing agent (part(s) by weight)/amount of polymerizable monomer (part(s) by weight))/resin particle specific surface area as measured by Mastersizer 2000 manufactured by Malvern Instruments Ltd.          (I)

   wherein the amount of the inorganic dispersing agent and the amount of the polymerizable monomer in the right-hand member of the equation (I) are each an amount introduced in the production of resinparticles, and the amount of the polymerizable monomer is 100 parts by weight.

2. The resin particles as claimed in claim 1, which have a CV value of 10 to 50%.

3. The resin particles as claimed in claim 1 or 2, wherein the eluted halogen concentration based on the resin particles is less than 24 ppm.

4. The resin particles as claimed in any one of claims 1 to 3, wherein the eluted metal concentration based on the resin particles is less than 20 ppm.

5. The resin particles as claimed in any one of claims 1 to 4, wherein the inorganic dispersing agent is silica.

6. A process for producing resin particles, comprising:

   [step 1]: a step of stirring a composition containing an aqueous medium, a polymerizable monomer, a polymerization initiator, an inorganic dispersing agent and an emulsifying agent to form a liquid in which oil droplets are dispersed in the aqueous medium, and
   [step 2]: a step of heating the dispersion with stirring to polymerize the polymerizable monomer.

7. The process for producing resin particles as claimed in claim 6, wherein in the step [1], the inorganic dispersing agent is used in an amount of 0. 01 to 2.0 parts by weight based on 100 parts by weight of the polymerizable monomer.

8. The process for producing resin particles as claimed in claim 6 or 7, wherein in the step [1], the inorganic dispersing agent has a mean primary particle diameter of 1 to 500 nm before it is added to the system.

9. The process for producing resin particles as claimed in any one of claims 6 to 8, wherein the inorganic dispersing agent is colloidal silica.

[Fig.1]

Relationship between amount of adhesion of silica and luminance

[Fig.2]

| INTERNATIONAL SEARCH REPORT | International application No. |
|---|---|
| | PCT/JP2010/070429 |

**A. CLASSIFICATION OF SUBJECT MATTER**
*C08F2/24*(2006.01)i, *C08F2/44*(2006.01)i

According to International Patent Classification (IPC) or to both national classification and IPC

**B. FIELDS SEARCHED**

Minimum documentation searched (classification system followed by classification symbols)
C08F2/24, C08F2/44

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 60-11503 A  (Nippon Paint Co., Ltd.), 21 January 1985 (21.01.1985), claims; example 6 (Family: none) | 1-9 |
| X | JP 2002-523534 A  (Green Technology Inc.), 30 July 2002 (30.07.2002), claim 1; paragraphs [0019], [0022]; example 1 & US 6630530 B1        & EP 1196467 A1 & WO 2000/011053 A1 | 1-9 |
| X A | JP 2005-281470 A  (Sekisui Plastics Co., Ltd.), 13 October 2005 (13.10.2005), examples (Family: none) | 6,8,9 1-5,7 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 December, 2010 (17.12.10) | 28 December, 2010 (28.12.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2010/070429 |

C (Continuation).    DOCUMENTS CONSIDERED TO BE RELEVANT

| Category* | Citation of document, with indication, where appropriate, of the relevant passages | Relevant to claim No. |
|---|---|---|
| X<br>A | JP 2006-96971 A  (Sanyo Chemical Industries, Ltd.),<br>13 April 2006 (13.04.2006),<br>examples<br>(Family: none) | 6,8,9<br>1-5,7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007217645 A
- JP 2000355639 A
- JP 6016707 A